# EUROPEAN PATENT SPECIFICATION

(11) **EP 3 492 500 B1**
(45) Date of publication and mention of the grant of the patent: **20.09.2023**
(21) Application number: 18209162.9
(22) Date of filing: 29.11.2018
(51) Int. Cl.: C08F 214/22

(54) **USE OF A CROSSLINKED PRODUCT OF A FLUORINE-CONTAINING AMORPHOUS ELASTOMER**
VERWENDUNG EINES VERNETZTEN PRODUKTS EINES FLUORHALTIGEN AMORPHEN ELASTOMERS
UTILISATION D'UN PRODUIT RÉTICULÉ D'UN ÉLASTOMÈRE AMORPHE CONTENANT DU FLUOR

(30) Priority: 01.12.2017 JP 2017231860
(43) Date of publication of application: 05.06.2019
(73) Proprietor: Daikin Industries, Ltd., Osaka-shi, Osaka 530-0001 (JP)
(72) Inventor: Kamiya, Yusuke, Osaka, 530-8323 (JP); Terada, Junpei, Osaka, 530-8323 (JP)
(74) Representative: Hoffmann Eitle

(56) References cited:
- WO-A1-2010/101304
- WO-A1-2013/125735
- JP-A- 2016 132 753

## Description

### TECHNICAL FIELD

The invention relates to the improvement of the alkali resistance of surfaces of components to be in contact with an alkali. The invention specifically relates to the use of a component for instruments or production lines requiring alkaline cleaning.

### BACKGROUND ART

Fluorine-containing elastomers (fluororubbers) containing VdF as an essential monomer, such as VdF (VdF)/hexafluoropropylene (HFP) copolymers and VdF/HFP/tetrafluoroethylene (TFE) copolymers, have excellent characteristics such as heat resistance, chemical resistance, and oil resistance. They are therefore used as materials of various parts in fields where the parts are used under severe conditions with high temperature or exposure to a variety of chemicals, such as the automobile industry, the aircraft industry, and the semiconductor industry.

S. Mitra et al., Polymer Degradation and Stability, 83, 195-206 (2004) teaches that fluorine-containing elastomers containing VdF as a constituent are less resistant to alkaline solutions.

JP-A_2013-216915 discloses a crosslinkable composition containing a fluorine-containing amorphous elastomer having a low glass transition temperature and excellent amine resistance.

### SUMMARY OF INVENTION

### -Technical Problem

The invention aims to provide a component that has steam resistance and acid resistance, that is less likely to swell and contract especially with an alkali, and that is less likely to cause dissolution of filler.

### -Solution to Problem

The inventors studied the alkali resistance to find that a surface formed from a composition containing a specific fluorine-containing elastomer maintains good resistance to acid and steam, as well as is less likely to swell and contract even when exposed to a high-concentration alkaline solution, and is less likely to cause degradation such as dissolution of filler. Thereby, the inventors have completed the invention.

The invention relates to the use of a crosslinked product of a fluorine-containing amorphous elastomer having a glass transition temperature of ≤ 25°C, determined by a method defined later herein, and being a copolymer of
(i) vinylidene fluoride,
(ii) a fluorine-containing monomer of the formula CH₂=CFRf (1) wherein Rf is linear or branched C₁₋₁₂-fluoroalkyl, and
(iii) 0-50 mol%, based on all monomer units of the copolymer, of a third monomer copolymerizable with these monomers,
with the molar ratio (i)/(ii) of the monomers (i) and (ii) being 87/13 to 20/80, to improve the alkali resistance of a surface of instruments or production lines requiring alkaline cleaning and being contacted with a solution having a pH of ≥ 8.0.

In is preferable in the above use that the surface is a surface of an instrument used in the food, cosmetic, healthcare or pharmaceutical industry.

### - Advantageous Effects of Invention

The component used in the invention (also referred to the "presently used component" hereinafter) exhibits high resistance to high-temperature steam, acids, and alkalis, and can therefore be applied to part of instruments or production lines used in the food industry, the cosmetic industry, the healthcare industry, or the pharmaceutical industry.

### DESCRIPTION OF EMBODIMENTS

The presently used component includes a surface that is to be in contact with a solution having a pH of ≥ 8.0, the surface containing a crosslinked product of a fluorine-containing amorphous elastomer which
1) has a glass transition temperature (Tg) of ≤ 25°C, determined by the method defined in the description; and
2) is a copolymer of
   (i) vinylidene fluoride,
   (ii) a fluorine-containing monomer of the formula CH₂=CFRf (1) wherein Rf is linear or branched C₁₋₁₂-fluoroalkyl, and
   (iii) 0-50 mol%, based on all monomer units of the copolymer, of a third monomer copolymerizable with these monomers,
   with the molar ratio (i)/(ii) of the monomers (i) and (ii) being 87/13 to 20/80.

In the following, vinylidene fluoride will also beabbreviated as "VdF", and the fluorine-containing monomer of the formula CH₂=CFRf (1) will also be referred to as "monomer (1)".

The fluorine-containing elastomer exhibits a very low glass transition temperature owing to its specific structure. The fluorine-containing polymer containing a unit of the monomer (1) rexhibits chemical resistance, oil resistance, heat resistance, flexibility, and cold resistance, and is less likely to degrade even when brought into contact with an alkali at high temperature. The elastomer advantageously has excellent crosslinking performance and is therefore easy to produce. The fluorine-containing elastomer is in an amorphous state.

The fluorine-containing elastomer has a glass transition temperature (Tg) which is ≤ 25°C, and may be ≤ 0°C. Tg is preferably -5°C or lower, more preferably -10°C or lower, and may also be -20°C or lower. The fluorine-containing elastomer exhibits a very low Tg, and thus has excellent low-temperature characteristics (cold resistance). The glass transition temperature (Tg) is defined as follows. Specifically, 10 mg of a sample is cooled down to -75°C and then warmed at a rate of 20°C/min using a differential scanning calorimeter (X-DSC823e, Hitachi High-Tech Science Corp.) so that a DSC curve is obtained. In the DSC curve, the extension of the base line before and after the secondary transition and the tangent of the point of inflection of the DSC curve are found, and the temperature at the intersection of these lines is defined as the glass transition temperature.

To achieve excellent chemical resistance, oil resistance, heat resistance, flexibility, and cold resistance, and to cause less degradation even when the elastomer is brought into contact with an alkali at high temperature, the monomer (1) is preferably a monomer in which Rf is linear fluoroalkyl, more preferably a monomer in which Rf is linear perfluoroalkyl. Rf preferably contains 1-6 carbon atoms. Examples of the monomer (1) include CH₂=CFCF₃, CH₂=CFCF₂CF₃, CH₂=CFCF₂CF₂CF₃, and CH₂=CFCF₂CF₂CF₂CF₃. Preferred is 2,3,3,3-tetrafluoropropene represented by CH₂=CFCF₃.

The fluorine-containing elastomer may further contain a third monomer in addition to VdF and the monomer (1). The third monomer may be any monomer copolymerizable with VdF and the monomer (1), and one monomer or two or more monomers may be used.

The third monomer is preferably at least one of tetrafluoroethylene (TFE), hexafluoropropylene, perfluoro(methyl vinyl ether), perfluoro(ethyl vinyl ether), perfluoro(propyl vinyl ether), chlorotrifluoroethylene, trifluoroethylene, hexafluoroisobutene, vinyl fluoride, ethylene, propylene, alkyl vinyl ether, and a monomer giving a crosslinking site. More preferred is at least one of TFE, hexafluoropropylene, perfluoro(methyl vinyl ether), perfluoro(ethyl vinyl ether), perfluoro(propyl vinyl ether), chlorotrifluoroethylene, trifluoroethylene, hexafluoroisobutene, vinyl fluoride, ethylene, alkyl vinyl ether, and a monomer giving a crosslinking site. Still more preferred is TFE. In a preferred embodiment, the third monomer consists only of TFE.

Examples of the monomer giving a crosslinking site in the fluorine-containing elastomer include:
iodine- or bromine-containing monomers of the formula:

   CX¹₂=CX¹-Rf¹CHR¹X²

   wherein X¹ is H, F or -CH₃; Rf¹ is fluoroalkylene, perfluoroalkylene, fluoro(poly)oxyalkylene or perfluoro(poly)oxyalkylene; R¹ is H or -CH₃; and X² is I or Br;
monomers of the formula:

   CF₂=CFO(CF₂CF(CF₃)O)ₘ(CF₂)ₙ-X³

   wherein m is an integer of 0-5; n is an integer of 1-3; and X³ is cyano, carboxyl, alkoxycarbonyl, I or Br; and
monomers of the formula:

   CH₂=CFCF₂O(CF(CF₃)CF₂O)ₘ(CF(CF₃))ₙ-X⁴

   wherein m is an integer of 0-5; n is an integer of 1-3; X⁴ is cyano, carboxyl, alkoxycarbonyl, I, Br or -CH₂OH.

Preferred is at least one of

CF₂=CFOCF₂CF(CF₃)OCF₂CF₂CN, CF₂=CFOCF₂CF(CF₃)OCF₂CF₂COOH,

CF₂=CFOCF₂CF₂CH₂I, CF₂=CFOCF₂CF(CF₃)OCF₂CF₂CH₂I,

CH₂=CFCF₂OCF(CF₃)CF₂OCF(CF₃)CN,

CH₂=CFCF₂OCF(CF₃)CF₂OCF(CF₃)COOH,

and

CH₂=CFCF₂OCF(CF₃)CF₂OCF(CF₃)CH₂OH.

To increase the crosslinking density and provide a favorable compression set in peroxide crosslinking, the monomer giving a crosslinking site is particularly preferably CF₂=CFOCF₂CF₂CH₂I. In addition, monomers mentioned as examples of the monomer giving a crosslinking site for the copolymer (III) to be mentioned later may also favorably be used.

The mole ratio of VdF units/units of the monomer (1) in the fluorine-containing elastomer is preferably (87/13)-(20/80), more preferably (85/15)-(20/80), and is preferably 22/78 or higher, more preferably 50/50 or higher, still more preferably 60/40 or higher. The amount of the third monomer units is 0-50 mol% of all the monomer units, more preferably 0-20 mol%.

The fluorine-containing elastomer is preferably a copolymer consisting only of VdF, the monomer (1) and the third monomer.

The fluorine-containing elastomer may contain an iodine atom and/or a bromine atom. In this case, the sum of the amounts of iodine atoms and bromine atoms is preferably 0.001-10 mass%.

To achieve excellent chemical resistance, oil resistance, heat resistance, flexibility, and cold resistance and to be less likely to degrade even when brought into contact with an alkali at high temperature, the fluorine-containing elastomer is preferably at least one of:
a copolymer (I) consisting only of VdF and the monomer (1), and containing VdF units and units of the monomer (1) in a VdF/monomer (1) molar ratio of (87/13)-(22/78) ;
a copolymer (II) consisting only of VdF, the monomer (1), and the third monomer copolymerizable with these monomers, and containing VdF units and units of the monomer (1) in a VdF/monomer (1) molar ratio of (85/15)-(20/80) and containing units of the third monomer in an amount of 1-50 mol% of all monomer units; and
a copolymer (III) containing VdF, the monomer (1), and the third monomer copolymerizable with these monomers, and containing VdF units and units of the monomer (1) in a VdF/monomer (1) molar ratio of (85/15)-(20/80), containing units of the third monomer in an amount of 0-50 mol% of all monomer units, and containing I or Br with the sum of the amounts thereof being 0.001-10 mass%.

The copolymer (I) consists only of VdF and the monomer (1), and contains VdF units and units of the (1) in a VdF/monomer (1) molar ratio of (87/13)-(20/80), preferably (85/15)-(22/78). To achieve excellent chemical resistance, oil resistance, heat resistance, flexibility, and cold resistance, the molar ratio of the VdF units/ monomer (1) units in the copolymer (I) is more preferably (85/15)-(60/40).

The copolymer (II) is a copolymer consisting only of VdF, the monomer (1), and the third monomer copolymerizable with VdF and the monomer (1), containing VdF units and units of the monomer (1) in a VdF/monomer (1) molar ratio (of (85/15)-(20/80), and containing units of the third monomer in an amount of 1-50 mol% of all monomer units. To achieve excellent chemical resistance, oil resistance, heat resistance, flexibility, and cold resistance, the molar ratio of the VdF units/ monomer (1) units in the copolymer (II) is preferably (85/15)-(50/50), more preferably (85/15)- (60/40) .

To achieve excellent chemical resistance, oil resistance, heat resistance, flexibility, and cold resistance, the amount of the third monomer units in the copolymer (II) is preferably 1-40 mol% of all monomer units. The third monomer is preferably any of those mentioned above.

The copolymer (III) is a copolymer containing VdF, the monomer of the formula CH₂=CFRf (1) wherein Rf is linear or branched C₁₋₁₂-fluoroalkyl in which any or all H are replaced by F, and the third monomer copolymerizable with VdF and the monomer (1), the copolymer containing VdF units and units of the monomer (1) in a molar ratio (VdF units/ monomer (1) units) of (85/15)-(20/80), containing units of the third monomer in an amount of 0-50 mol% of all monomer units, having a glass transition temperature of ≤ 25°C, and containing I and/or Br with the sum of the amounts thereof being 0.001-10 mass%.

The copolymer (III) is preferably a copolymer consisting only of VdF and the monomer of the formula CH₂=CFRf (1) wherein Rf is linear or branched C₁₋₁₂-fluoroalkyl in which any or all H are replaced by F, or a copolymer consisting only of VdF, the monomer (1), and the third monomer copolymerizable with the VdF and the monomer (1). In this case, the copolymer (III) is a copolymer substantially consisting only of VdF and the monomer (1) or a copolymer substantially consisting only of VdF, the monomer (1), and the third monomer. Still, the copolymer may be produced with the use of a reactive emulsifier to the extent that does not impair the effects of the invention. The copolymer may further contain an iodine or bromine end derived from a chain-transfer agent, for example.

The copolymer (III) is more preferably a copolymer consisting only of VdF and the monomer (1) and containing VdF units VdF and units of the monomer (1) in a VdF/monomer (1) molar ratio of (80/20)-(20/80) .

Alternatively, the VdF/monomer (1) molar ratio in the copolymer (III) may preferably be (85/15)-(50/50) and the amount of the third monomer unit may be 0-50 mol% of all monomer units.

The amounts of the monomer units are values determined by NMR.

The copolymer (III) contains I and/or Br, and the sum of the amounts thereof is 0.001-10 mas%, preferably 0.01-5 mass%, more preferably 0.1-5 mass%. The iodine content can be determined as follows. Specifically, 12 mg of a sample (fluorine-containing polymer) is mixed with 5 mg of Na₂SO₃. Separately, 30 mg of a mixture of Na₂CO₃ and K₂CO₃ (mass ratio = 1:1) is dissolved in 20 ml of pure water to prepare an absorption liquid. With this absorption liquid, the sample mixture is burnt in the presence of oxygen in a quartz combustion flask. The product is left for 30 minutes, and then analyzed using an ion chromatograph 20A (Shimadzu Corp.). The calibration curve used may be a curve of a KI standard solution containing 0.5 ppm or 1.0 ppm of iodine ions.

The binding sites of I and Br may be either an end of the main chain or an end of a side chain of the copolymer (III), or may be both of them, of course. In such a copolymer, the I or Br end serves as a crosslinking point (crosslinking site). This enables production of a crosslinked fluorine-containing polymer having a high crosslinking density and enables easier peroxide crosslinking.

The copolymer (III) may contain an iodine- or bromine-containing monomer as a monomer giving a crosslinking site. Such a copolymer can be produced with the use of a bromine compound or an iodine compound as a polymerization initiator or a chain-transfer agent.

In the copolymer (III), the third monomer may be any monomer copolymerizable with the VdF and the monomer (1). One monomer or two or more monomers may be used.

The copolymer (III) preferably contains units of the third monomer in an amount of 0-50 mol% of all monomer units, more preferably 0-40 mol%, still more preferably 0-20 mol%.

Examples of the monomer giving a crosslinking site in the copolymer (III) include:
iodine- or bromine-containing monomers of the formula:

   CX¹₂=CX¹-Rf¹CHR¹X²

   wherein X¹ is H, F or -CH₃; Rf¹ is fluoroalkylene, perfluoroalkylene, fluoro(poly)oxyalkylene or perfluoro (poly) oxyalkylene; R¹ is H or -CH₃; and X² is I or Br;
iodine- or bromine-containing monomers of the formula:

   CX¹₂=CX¹-Rf¹X²

   wherein X¹ is H, F or -CH₃; Rf¹ is fluoroalkylene, perfluoroalkylene, fluoro(poly)oxyalkylene or perfluoro(poly)oxyalkylene; and X² is I or Br (preferably, iodine-containing monomers of the formula CH₂=CH(CF₂)ₙI, wherein n is an integer of 2-8);
monomers of the formula:

   CF₂=CFO(CF₂CF(CF₃)O)ₘ(CF₂)ₙ-X³

   wherein m is an integer of 0-5; n is an integer of 1-3; and X³ is cyano, carboxyl, alkoxycarbonyl, I or Br;
monomers of the formula:

   CH₂=CFCF₂O(CF(CF₃)CF₂O)ₘ(CF(CF₃))ₙ-X⁴

   wherein m is an integer of 0-5; n is an integer of 1-3; and X⁴ is cyano, carboxyl, alkoxycarbonyl, iodine, Br or - CH₂OH; and
monomers of the formula:

   CR²R³=CR⁴-Z-CR⁵=CR⁶R⁷

   wherein R²-R⁷ each independently are H or C₁₋₅-alkyl group; and Z is C₁₋₁₈-alkylene, C₃₋₁₈-cycloalkylene, an at least partially fluorinated C₁₋₁₀-alkylene or oxyalkylene group, or (per)fluoropolyoxyalkylene of the formula -(Q)ₚ-CF₂O-(CF₂CF₂O)ₘ(CF₂O)ₙ-CF₂-(Q)ₚ- wherein Q is alkylene or oxyalkylene; p is 0 or 1; and m/n is 0.2-5, and that has a molecular weight of 500-10000, each of which is linear or branched and optionally has an oxygen atom.

Examples of the compounds of the formula CR²R³=CR⁴-Z-CR⁵=CR⁶R⁷ include CH₂=CH-(CF₂)₂-CH=CH₂, CH₂=CH-(CF₂)₄-CH=CH₂, CH₂=CH-(CF₂)₆-CH=CH₂, and monomers of the formula:

CH₂=CH-Z¹-CH=CH₂

wherein Z¹ is fluoropolyoxyalkylene that is represented by -CH₂OCH₂-CF₂O-(CF₂CF₂O)ₘ₁(CF₂O)ₙ₁-CF₂-CH₂OCH₂- (wherein m1/n1 is 0.5) and that has a molecular weight of 2000.

In a preferred embodiment, the monomer giving a crosslinking site is preferably at least one of CF₂=CFOCF₂CF(CF₃)OCF₂CF₂CN, CF₂=CFOCF₂CF (CF₃)OCF₂CF₂COOH, CF₂=CFOCF₂CF(CF₃)OCF₂CF₂CH₂I, CF₂=CFOCF₂CF₂CH₂I, CH₂=CFCF₂OCF(CF₃)CF₂OCF(CF₃)CN, CH₂=CFCF₂OCF(CF₃)CF₂OCF(CF₃)COOH, CH₂=CFCF₂OCF(CF₃)CF₂OCF(CF₃)CH₂OH, and CH₂=CHCF₂CF₂I, CH₂=CH(CF₂)₂CH=CH₂. To increase the crosslinking density and provide a favorable compression set in peroxide crosslinking, the monomer giving a crosslinking site is particularly preferably CF₂=CFOCF₂CF₂CH₂I.

In a preferred embodiment, the monomer giving a crosslinking site may also be at least one monomer selected from:
iodine- or bromine-containing monomers of the formula:

   CX¹₂=CX¹-Rf¹CHR¹X²

   wherein X¹ is H, F or -CH₃; Rf¹ is fluoroalkylene, perfluoroalkylene, fluoro(poly)oxyalkylene or perfluoro (poly) oxyalkylene; R¹ is H or -CH₃; and X² is I orBr;
iodine- or bromine-containing monomers of the formula:

   CX¹₂=CX¹-Rf¹X²

   wherein X¹ is H, F or -CH₃; Rf¹ is fluoroalkylene, perfluoroalkylene, fluoro(poly)oxyalkylene or perfluoro(poly)oxyalkylene; and X² is I or Br (preferably, iodine-containing monomers of the formula CH₂=CH(CF₂)ₙI, wherein n is an integer of 2-8);
monomers of the formula:

   CF₂=CFO(CF₂CF(CF₃)O)ₘ(CF₂)ₙ-X⁵

   wherein m is an integer of 0-5; n is an integer of 1-3; and X⁵ is I or F; and
monomers of the formula:

   CH₂=CFCF₂O(CF(CF₃)CF₂O)ₘ(CF(CF₃))ₙ-X⁵

   wherein m is an integer of 0-5; n is an integer of 1-3; and X⁵ is I or Br.

The presence of such an iodine- or bromine-containing monomer as the third monomer also enables production of the copolymer (III).

The copolymer (III) contains units of the monomer giving a crosslinking site in an amount of preferably 0.01-10 mol%, more preferably 0.01-2 mol%, of all monomer units.

To achieve excellent chemical resistance, oil resistance, heat resistance, flexibility, and cold resistance, the fluorine-containing elastomer is still more preferably a copolymer (III).

To achieve excellent chemical resistance, oil resistance, heat resistance, flexibility, and cold resistance and to be less likely to degrade even when brought into contact with an alkaline solution at high temperature, the fluorine-containing elastomer preferably has a number average molecular weight (Mn) of 7000-500000 and a weight average molecular weight (Mw) of 10000-1000000, and preferably satisfies a ratio Mw/Mn of 1.3-4.0. The number average molecular weight (Mn), the weight average molecular weight (Mw), and the ratio Mw/Mn are values determined by GPC.

To achieve good molding processability, the fluorine-containing elastomer preferably has a Mooney viscosity (ML 1+10 (100°C)) of ≥ 2, more preferably ≥ 5, at 100°C. Also, to achieve good molding processability, this Mooney viscosity is preferably ≤ 200, more preferably ≤ 150, still more preferably ≤ 100. The Mooney viscosity is a value determined in conformity with ASTM-D1646 and JIS K6300.

The fluorine-containing elastomer can be produced by common radical polymerization. The polymerization may be any of bulk polymerization, solution polymerization, suspension polymerization, and emulsion polymerization. In order to perform the polymerization easily in an industrial context, emulsion polymerization is preferred.

In the polymerization, a polymerization initiator, a chain-transfer agent, a surfactant, and a solvent may be used. Each of these agents may be a conventionally known one. The polymerization initiator to be used in production of a copolymer by polymerization may be an oil-soluble radical polymerization initiator or a water-soluble radical polymerization initiator.

The oil-soluble radical polymerization initiator may be a known oil-soluble peroxide, and typical examples thereof include dialkyl peroxycarbonates such as diisopropyl peroxydicarbonate and di-sec-butyl peroxydicarbonate; peroxy esters such as t-butyl peroxyisobutyrate and t-butyl peroxypivalate; dialkyl peroxides such as di-t-butyl peroxide; and di(perfluoro (or fluorochloro)acyl)peroxides such as di(ω-hydro-dodecafluoroheptanoyl)peroxide, di(w-hydro-tetradecafluoroheptanoyl)peroxide, di(w-hydro-hexadecafluorononanoyl)peroxide, di(perfluorobutyryl)peroxide, di(perfluorovaleryl)peroxide, di(perfluorohexanoyl)peroxide, di (perfluoroheptanoyl)peroxide, di(perfluorooctanoyl)peroxide, di(perfluorononanoyl)peroxide, di(w-chloro-hexafluorobutyryl)peroxide, di(w-chloro-decafluorohexanoyl)peroxide, di(w-chloro-tetradecafluorooctanoyl)peroxide, ω-hydro-dodecafluoroheptanoyl-w-hydrohexadecafluorononanoyl-peroxide, o-chloro-hexafluorobutyryl-o-chloro-decafluorohexanoyl-peroxide, w-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide, and examples thereof include ammonium salts, potassium salts, and sodium salts of persulfuric acid, perboric acid, perchloric acid, perphosphoric acid, and percarbonic acid, t-butyl permaleate, and t-butyl hydroperoxide. Any reducing agent such as a sulfite or a sulfurous acid salt may be used in combination, and the amount thereof may be 0.1-20 times the amount of the peroxide.

The amount of the polymerization initiator may be, but is not limited to, an amount that does not significantly decrease the polymerization rate (e.g., several parts per million in water) or more. Such an amount of the initiator may be added at once in the early stage of polymerization, or may be added successively or continually. The upper limit of the amount thereof is within a range where the polymerization reaction heat can be removed from the surface of a device.

Examples of the surfactant include nonionic surfactants, anionic surfactants, and cationic surfactants. Preferred are linear or branched fluorine-containing anionic C₄₋₂₀-fluorosurfactants such as ammonium perfluorooctanoate and ammonium perfluorohexanoate. The amount thereof (relative to water as a polymerization medium) is preferably 10-5000 ppm, more preferably 50-5000 ppm. A reactive emulsifier may be used as a surfactant. The reactive emulsifier may be any compound containing one or more unsaturated bonds and one or more hydrophilic groups. Examples thereof include CH₂=CFCF₂OCF(CF₃)CF₂OCF(CF₃)COONH₄, CH₂=CFCF₂CF(CF₃)OCF₂CF₂COONH₄, and CF₂=CFOCF₂CF(CF₃)OCF(CF₃)COONH₄. The amount thereof (relative to water as a polymerization medium) is preferably 10-5000 ppm, more preferably 50-5000 ppm.

The solvent is preferably a solvent exhibiting no chain transfer performance. Examples of the solvent include dichloropentafluoropropane (R-225) for solution polymerization, and water, a mixture of water and a water-soluble organic solvent, and a mixture of water and water-insoluble organic solvent for emulsion polymerization and suspension polymerization.

In production of the copolymers (I) and (II) by polymerization, examples of the chain-transfer agent include esters such as dimethyl malonate, diethyl malonate, methyl acetate, ethyl acetate, butyl acetate, and dimethyl succinate, as well as isopentane, methane, ethane, propane, isopropanol, acetone, mercaptans, carbon tetrachloride, and cyclohexane.

The chain-transfer agent may be a bromine compound or an iodine compound. An example of a polymerization method using a bromine compound or an iodine compound is a method of performing emulsion polymerization in an aqueous medium under pressure substantially in the absence of oxygen and in the presence of a bromine compound or an iodine compound (iodine transfer polymerization). Representative examples of the bromine compound or the iodine compound to be used include compounds of the formula:

R²IₓBr_{y}

wherein x and y are each an integer of 0-2 and satisfy 1 ≤ x + y ≤ 2; and R² is a saturated or unsaturated C₁₋₁₆-fluorohydrocarbon or -chlorofluorohydrocarbon group, or a C₁₋₃-hydrocarbon group, each of which optionally contains an oxygen atom. The presence of a bromine compound or an iodine compound enables introduction of I or Br into the polymer, and such I or Br introduced can serve as a crosslinking point.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, and a monoiodo- and monobromo-substitution product, a diiodo- and monobromo-substitution product, and (2-iodoethyl)- and (2-bromoethyl)-substitution product of benzene. These compounds may be used alone or in any combination.

To achieve good polymerization reactivity, crosslinkability, and easy availability, for example, 1,4-diiodoperfluorobutane, 1,6-diiodoperfluorohexane, or 2-iodoperfluoropropane is preferably used.

In production of the copolymer (III) by polymerization, the chain-transfer agent used is preferably a bromine compound or an iodine compound. An example of a polymerization method using a bromine compound or an iodine compound is a method of performing emulsion polymerization in an aqueous medium under pressure substantially in the absence of oxygen and in the presence of a bromine compound or an iodine compound (iodine transfer polymerization). Representative examples of the bromine compound or the iodine compound to be used include compounds of the formula:

R²IₓBr_{y}

wherein x and y are each an integer of 0-2 and satisfy 1 ≤ x + y ≤ 2; and R² is a saturated or unsaturated C₁₋₁₆-fluorohydrocarbon or -chlorofluorohydrocarbon group, or a C₁₋₃-hydrocarbon group, each of which optionally contains an oxygen atom. The presence of a bromine compound or an iodine compound enables introduction of I or Br into the polymer, and such I or Br introduced can serve as a crosslinking point.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, and monoiodo- and monobromo-substitution products, diiodo- and monobromo-substitution products, and (2-iodoethyl)- and (2-bromoethyl)-substitution products of benzene. These compounds may be used alone or in any combination. In order to achieve good polymerization reactivity, crosslinkability, and easy availability, for example, 1,4-diiodoperfluorobutane, 1,6-diiodoperfluorohexane, or 2-iodoperfluoropropane is preferably used.

In production of the copolymer (III) by polymerization, the chain-transfer agent used may be any of esters such as dimethyl malonate, diethyl malonate, methyl acetate, ethyl acetate, butyl acetate, and dimethyl succinate, as well as isopentane, methane, ethane, propane, isopropanol, acetone, mercaptans, carbon tetrachloride, and cyclohexane.

In production of the copolymer by polymerization, the polymerization temperature, the polymerization pressure, and the polymerization time may vary in accordance with the types of the solvent and the polymerization initiator, and may be respectively -15°C to 150°C, atmospheric pressure to 6.5 MPa, and 1-24 hours. In particular, in the case of using, as a polymerization initiator, an oil-soluble radical polymerization initiator containing a fluorine atom in solution polymerization, the polymerization temperature is preferably -15°C to 50°C, more preferably 10-35°C. In the case of using an oil-soluble radical polymerization initiator containing a fluorine atom in emulsion polymerization and suspension polymerization, the polymerization temperature is preferably 30-95°C. In the case of using a water-soluble radical polymerization initiator as a polymerization initiator, the polymerization temperature is preferably 0-100°C, more preferably 10-95°C. In order to increase the polymerization rate and to improve the productivity, the polymerization pressure is preferably ≥ 1.0 MPa, more preferably ≥ 2.0 MPa, still more preferably ≥ 3.0 MPa, most preferably ≥ 4.5 MPa.

The copolymer may be in any form such as an aqueous dispersion or powder. In the case of emulsion polymerization, the copolymer powder can be produced by coagulating the dispersion immediately after the polymerization, washing the coagulated product with water, and then dehydrating and drying the product. The coagulation can be performed by addition of an inorganic salt such as aluminum sulfate or an inorganic acid, application of a mechanical shearing force, or freezing of the dispersion. In the case of suspension polymerization, the copolymer powder can be obtained by collecting the particles in the dispersion immediately after the polymerization and drying the particles. In the case of solution polymerization, the copolymer powder can be obtained by directly drying a solution containing the fluorine-containing polymer, or by purifying the copolymer by dropping a poor solvent.

One copolymer may be used, or two or more copolymers may be used. In particular, two copolymers having different molecular structures may be used in combination. The combination use of two copolymers having different molecular structures may be, for example, use of two copolymers (I) having different molecular structures, use of two copolymers (II) having different molecular structures, use of two copolymers (III) having different molecular structures, use of one copolymer (I) and one copolymer (II), use of one copolymer (I) and one copolymer (III), and use of one copolymer (II) and one copolymer (III) .

As described above, in the combination use of two fluorine-containing elastomers, preferably, one is a branched fluorine-containing elastomer and the other is a linear fluorine-containing elastomer. In a more preferred embodiment, as disclosed in WO 2009/119409, one is a branched fluorine-containing polymer (A) containing a peroxide-crosslinkable site, having a number average molecular weight of 1,000-300,000, and having a Mark-Houwink slope a of < 0.6 in the Mark-Houwink plot, with the horizontal axis showing the absolute weight molecular weight and the vertical axis showing the intrinsic viscosity, and the other is a linear fluorine-containing polymer (B) having a number average molecular weight of 1,000-250,000 and a Mark-Houwink slope a of ≥ 0.6 in the Mark-Houwink plot, with the horizontal axis showing the absolute weight molecular weight and the vertical axis showing the intrinsic viscosity; or one is a branched fluorine-containing elastomer (A) obtained by a production method in which, in copolymerization of an ethylenic unsaturated compound containing at least one fluoroolefin and a compound of the formula:

CY¹₂=CY²Rf²X²

wherein Y¹ and Y² are each H, F or -CH₃; Rf² is linear or branched fluorine-containing alkylene which optionally contains an etheric oxygen atom and in which any or all H are replaced by F; and X² is I or Br, addition of the compound of the above formula is started after 0-10 mass% of the whole ethylenic unsaturated compound to be added to the polymerization system is added after addition of a polymerization initiator, and the other is a linear fluorine-containing elastomer (B) having a number average molecular weight of 1,000-250,000 and a Mark-Houwink slope a of ≥ 0.6 in the Mark-Houwink plot, with the horizontal axis showing the absolute weight molecular weight and the vertical axis showing the intrinsic viscosity. As described above, in a preferred embodiment, the fluorine-containing elastomers in the invention are selected such that one is a branched fluorine-containing elastomer, which is a copolymer (II) or a copolymer (III), having a peroxide-crosslinkable site, a number average molecular weight of 1,000-300,000, and a Mark-Houwink slope a of < 0.6 in the Mark-Houwink plot, with the horizontal axis showing the absolute weight molecular weight and the vertical axis showing the intrinsic viscosity or a branched fluorine-containing elastomer obtained by a production method in which, in copolymerization of an ethylenic unsaturated compound containing at least one fluoroolefin and a compound of the formula:

CY¹₂=CY²Rf²X²

wherein Y¹ and Y² are each H, F or -CH₃; Rf² is linear or branched fluorine-containing alkylene which optionally contains an etheric oxygen atom and in which any or all H are replaced by F; and X² is I or Br, addition of the compound represented by the above formula is started after 0-10 mass% of the whole ethylenic unsaturated compound to be added to the polymerization system is added after addition of a polymerization initiator, and the other is a linear fluorine-containing elastomer, which is a copolymer (I), a copolymer (II), or a copolymer (III), having a number average molecular weight of 1,000-250,000 and a Mark-Houwink slope a of ≥ 0.6 in the Mark-Houwink plot, with the horizontal axis showing the absolute weight molecular weight and the vertical axis showing the intrinsic viscosity.

The amount of the crosslinker used in the invention is preferably 0.01-10 parts by mass (pbm), more preferably 0.1-5 pbm, relative to 100 pbm of the fluorine-containing elastomer, although it is not limited thereto. Less than 0.01 pbm of the crosslinker tends to give an insufficient degree of crosslinking, while more than 10 pbm thereof may cause so high a crosslinking density that the crosslinking time is prolonged, which is not preferred from the economic viewpoint.

The crosslinker may be any crosslinker usually used for polyamine crosslinking, polyol crosslinking, and peroxide crosslinking, and is preferably at least one of a polyamine compound, a polyhydroxy compound, and an organic peroxide.

Examples of the polyamine compound include hexamethylenediamine carbamate, N,N'-dicinnamylidene-1,6-hexamethylene diamine, and 4,4'-bis(aminocyclohexyl)methane carbamate. Preferred among these is N,N'-dicinnamylidene-1,6-hexamethylene diamine.

To achieve excellent heat resistance, the polyhydroxy compound is preferably a polyhydroxyaromatic compound. Examples of the polyhydroxyaromatic compound include, but are not limited to, 2,2-bis(4-hydroxyphenyl)propane (hereinafter, referred to as bisphenol A), 2,2-bis(4-hydroxyphenyl)perfluoropropane (hereinafter, referred to as bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter, referred to as bisphenol B), 4,4-bis(4-hydroxyphenyl)valeric acid, 2,2-bis(4-hydroxyphenyl)tetrafluorodichloropropane, 4,4'-dihydroxydiphenylsulfone, 4,4'-dihydroxydiphenylketone, tri(4-hydroxyphenyl)methane, 3,3',5,5'-tetrachlorobisphenol A, and 3,3',5,5'-tetrabromobisphenol A. These polyhydroxyaromatic compounds may be in the form of an alkali metal salt or an alkaline earth metal salt. In the case of coagulating the copolymer using an acid, such metal salts are preferably not used.

The crosslinker which is a polyhydroxy compound preferably contains a crosslinking accelerator. The crosslinking accelerator promotes generation of an intramolecular double bond during dehydrofluorination of the main chain of the fluorine-containing polymer and addition of a polyhydroxy compound to the resulting double bond.

Examples of the crosslinking accelerator include onium compounds. Preferred among the onium compounds is at least one selected from the group consisting of ammonium compounds such as quaternary ammonium salts, phosphonium compounds such as quaternary phosphonium salts, oxonium compounds, sulfonium compounds, cyclic amines, and monofunctional amine compounds, and more preferred is at least one selected from the group consisting of quaternary ammonium salts and quaternary phosphonium salts.

Examples of the quaternary ammonium salts include, but are not limited to, 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methyl sulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5,4,0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter, referred to as DBU-B), 8-benzyl-1,8-diazabicyclo[5.4.0]-7-undecenium hydroxide, 8-phenethyl-1,8-diazabicyclo[5.4.0]-7-undecenium chloride, and 8-(3-phenyl propyl)-1,8-diazabicyclo[5.4.0]-7-undecenium chloride. Preferred among these is DBU-B because it has excellent crosslinkability and various physical properties.

Examples of the quaternary phosphonium salts include, but are not limited to, tetrabutylphosphonium chloride, benzyltriphenylphosphonium chloride (hereinafter, referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride. Preferred among these is benzyltriphenylphosphonium chloride (BTPPC) because it has excellent crosslinkability and various physical properties.

The crosslinking accelerator may be a quaternary ammonium salt, a solid solution of a quaternary phosphonium salt and bisphenol AF, or a chlorine-free crosslinking accelerator disclosed in JP-A-1999-147891.

The amount of the crosslinking accelerator is preferably 0.01-8 pbm, more preferably 0.02-5 pbm, relative to 100 pbm of the fluorine-containing elastomer, although it is not limited thereto. Less than 0.01 pbm of the crosslinking accelerator tends to cause insufficient crosslinking of the fluorine-containing polymer, resulting in poor chemical resistance, oil resistance, and heat resistance of the resulting component. More than 8 pbm thereof tends to impair the molding processability of the crosslinkable composition.

The organic peroxide may be any organic peroxide capable of easily generating a radical by heat or in the presence of a redox system. Examples thereof include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, α,α-bis(t-butylperoxy)-p-diisopropyl benzene, 2,5-dimethyl-2,5-di(t-butylperoxy)hexane, 2,5-dimethyl-2,5-di(t-butylperoxy)-hexyne-3, benzoyl peroxide, t-butyl peroxy benzene, t-butyl peroxy maleic acid, t-butyl peroxy isopropyl carbonate, and t-butyl peroxy benzoate. Preferred among these are 2,5-dimethyl-2,5-di(t-butylperoxy)hexane and 2,5-dimethyl-2,5-di(t-butylperoxy)-hexyne-3.

The crosslinker which is an organic peroxide preferably contains a crosslinking aid. Examples of the crosslinking aid include triallyl cyanurate, trimetallyl isocyanurate, triallyl isocyanurate (TAIC), triacrylformal, triallyl trimellitate, N,N'-m-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallyl acrylamide, 1,6-divinyl dodecafluorohexane, hexaallyl phosphoramide, N,N,N',N'-tetraallyl phthalamide, N,N,N',N'-tetraallyl malonamide, trivinyl isocyanurate, 2,4,6-trivinylmethyltrisiloxane, tri(5-norbornene-2-methylene)cyanurate, and triallyl phosphite. Preferred among these is triallyl isocyanurate (TAIC) because it has excellent crosslinkability and various physical properties.

The amount of the crosslinking aid is preferably 0.01-10 pbm, more preferably 0.1-5.0 pbm, relative to 100 pbm of the fluorine-containing elastomer, although it is not limited thereto. Less than 0.01 pbm of the crosslinking aid tends to prolong the crosslinking time to the extent that is unsuited to practical use. More than 10 pbm thereof tends to cause too short a crosslinking time and a low compression set of the component.

Polyamine crosslinking with a polyamine compound used as a crosslinker can be performed in a conventional manner. For example, polyamine crosslinking may be performed by a method in which a fluorine-containing elastomer and a crosslinker, optionally with a crosslinking accelerator, and any other additive which can be mixed as appropriate are kneaded with a roll, the mixture is put into a mold and pressurized, and then subjected to first crosslinking, followed by second crosslinking. The first crosslinking conditions are usually selected such that the temperature is 100-200°C, the duration is 5-120 minutes, and the pressure is about 2-10 MPa. The second crosslinking conditions are usually selected such that the temperature is 150-300°C and the duration is about 30 minutes to 30 hours.

Polyol crosslinking with a polyhydroxy compound used as a crosslinker can be performed in a conventional manner. For example, polyol crosslinking may be performed by a method in which a fluorine-containing elastomer and a crosslinker, optionally with a crosslinking accelerator, and any other additive which can be mixed as appropriate are kneaded with a roll, the mixture is put into a mold and pressurized, and then subjected to first crosslinking, followed by second crosslinking. The kneading may preferably be performed using an internal mixer or a Banbury mixer. The first crosslinking may usually be performed at 2-10 MPa and 100-200°C for 5-60 minutes. The second crosslinking may usually be performed at 150-300°C for 30 minutes to 30 hours.

Peroxide crosslinking with an organic peroxide used as a crosslinker can be performed in a conventional manner. For example, peroxide crosslinking may be performed by a method in which a fluorine-containing elastomer and a crosslinker, optionally with a crosslinking accelerator, and any other additive which can be mixed as appropriate are kneaded with a roll, the mixture is put into a mold and pressurized, and then subjected to first crosslinking, followed by second crosslinking. The first crosslinking may usually be performed at 2-10 MPa and 100-200°C for 5-60 minutes. The second crosslinking may usually be performed at 150-300°C for 30 minutes to 30 hours.

The fluorine-containing elastomer which is a copolymer (III) contains I and/or Br with the sum of the amounts thereof being 0.001-10 mass%. Thus, an iodine end or a bromine end serves as a crosslinking point (crosslinking site) and can further increase the crosslinking density.

A fluorine-containing elastomer composition in which the fluorine-containing elastomer is a copolymer (III) more preferably contains an organic peroxide as a crosslinker. The copolymer (III) contains I and/or Br with the sum of the amounts thereof being 0.001-10 mass%. Thus, the presence of an organic peroxide enables easier peroxide crosslinking. The organic peroxide may be any of those mentioned above, and is preferably at least one compound of 2,5-dimethyl-2,5-di(t-butylperoxy)hexane and 2,5-dimethyl-2,5-di(t-butylperoxy)-hexyne-3. The fluorine-containing elastomer composition preferably contains a crosslinking aid. The crosslinking aid may be any of those mentioned above, and is preferably triallyl isocyanurate (TAIC) because it has excellent crosslinkability and gives excellent physical properties to the resulting molded article.

In the fluorine-containing elastomer composition in which the fluorine-containing elastomer is a copolymer (III), the amount of the crosslinking aid is preferably 0.01-10 pbm, more preferably 0.1-5.0 pbm, relative to 100 pbm of the fluorine-containing elastomer. Less than 0.01 pbm of the crosslinking aid tends to prolong the crosslinking time to the extent that is unsuited to practical use. More than 10 pbm thereof tends to cause too short a crosslinking time and a low compression set of the component.

For the fluorine-containing elastomer composition in which the fluorine-containing elastomer is a copolymer (III), the crosslinking conditions may appropriately be determined in accordance with, for example, the type of a crosslinker used, for example. The crosslinking is usually achieved by baking at 150-300°C for 1 minute to 24 hours. The crosslinking may be performed at normal pressure, under pressure, or under reduced pressure, and in the air.

Preferably, the fluorine-containing elastomer composition in which the fluorine-containing elastomer is a copolymer (III) contains an organic peroxide as a crosslinker and is peroxide-crosslinkable. Peroxide crosslinking with an organic peroxide used as a crosslinker can be performed in a conventional manner. For example, peroxide crosslinking may be performed by a method in which a copolymer (III) and a crosslinker, optionally with a crosslinking accelerator, and any other additive which can be mixed as appropriate are kneaded with a roll, the mixture is put into a mold and pressurized, and then subjected to first crosslinking, followed by second crosslinking. The first crosslinking may usually be performed at 2-10 MPa and 100-200°C for 5-60 minutes. The second crosslinking may usually be performed at 150-300°C for 30 minutes to 30 hours.

The fluorine-containing elastomer composition used in the invention may optionally contain any of additives usually blended into a fluorine-containing elastomer composition, such as filler (e.g., carbon black, barium sulfate), acid acceptors, processing aids (e.g., wax), plasticizers, colorants, stabilizers, adhesive aids, release agents, conductivity-imparting agents, thermal-conductivity-imparting agents, surface non-adhesive agents, flexibility-imparting agents, heat-resistance improvers, and flame retardants. The composition may contain one or more of common crosslinkers and crosslinking accelerators other than those mentioned above. The amount of filler such as carbon black is preferably 0-150 pbm, more preferably 1-100 pbm, still more preferably 2-50 pbm, relative to 100 pbm of the fluorine-containing elastomer, although it is not limited thereto. The amount of a processing aid such as wax is preferably 0-10 pbm relative to 100 pbm of the peroxide-crosslinkable fluorine-containing elastomer.

The presently used component may be produced by molding the fluorine-containing elastomer composition and then crosslinking the molded article, or may be produced by molding and crosslinking the composition simultaneously. The presently used component exhibits steam resistance and acid resistance, is less likely to swell and contract with an alkali, and is less likely to cause dissolution of filler. Thus, the component can suitably be used for part of instruments or production lines used in the food industry, the cosmetic industry, the healthcare industry, or the pharmaceutical industry.

The crosslinking conditions may appropriately be determined in accordance with, for example, the type of a crosslinker to be used. The crosslinking is usually achieved by baking at 150-300°C for 1 minute to 24 hours. The crosslinking may be performed at normal pressure, under pressure, or under reduced pressure, and in the air.

The crosslinking method may be, but is not limited to, steam crosslinking, pressure molding, or a usual method in which the crosslinking reaction is initiated by heating. It may be radiation crosslinking at normal temperature and normal pressure. The first crosslinking process (also referred to as first crosslinking) may be followed by a post-treatment process called second crosslinking.

The molding technique may be, but is not limited to, compression molding, extrusion molding, transfer molding, or injection molding.

The presently used component has only to include a surface to be in contact with an alkali solution, and can suitably be used for instruments or parts requiring alkaline cleaning. The component may also be used for a part constituting part of a production line. The component may be used in various fields such as, but not limited to, the food industry, the cosmetic industry, the healthcare industry, and the pharmaceutical industry.

For example, in the food industry, the component may be used for food plant devices, food production equipment, wrapping devices, mixing devices, stirring devices, granulating devices, brewing equipment, processing devices, printing devices, heat exchangers, filling equipment, cleaning equipment, sterilization equipment, disinfection equipment, storage devices, conveyors, sanitary pipes (including joint portions), liquid delivery pumps, pumps, food contact tools (including household utensils), and household appliances such as multifunction microwave ovens and hot water dispersers.

For example, in the healthcare industry, the component may be used for medical supply production equipment, medical tools, medical devices, sterilization equipment, disinfection equipment, cleaning equipment, culturing devices, liquid delivery pumps, conveyors, sanitary pipes (including joint portions), analysis devices, physical and chemical appliances, endoscope devices, syringes, catheters, transfer tubes, ultrasonic probes, healthcare and nursing-care robots, aspirators, and pressure devices.

For example, in the cosmetic industry, the component may be used for cosmetic production equipment, mixing devices, granulating devices, tableting devices, molding devices, conveyors, sanitary pipes (including joint portions), syringes, sterilization equipment, disinfection equipment, cleaning equipment, analysis devices, physical and chemical appliances, storage tanks, pumps, milling devices, filling equipment, printing devices, and wrapping devices.

For example, in the pharmaceutical industry, the component may be used for drug production equipment, mixing devices, granulating devices, tableting devices, molding devices, culturing devices, pumps, sanitary pipes (including joint portions), ampoules, vials, syringes, analysis devices, physical and chemical appliances, filling equipment, printing devices, and wrapping devices.

The component of the invention can also be used for part to be in contact with an alkali in CIP, COP, or other cleaning and disinfection technique. This part may be part of an instrument or may constitute part of a production line used in any of the industries mentioned above, although not limited thereto. Examples of more specific applications of the component in practical use include sealants, gaskets, packings, O-rings, ferrules, plugs, septums, flexible materials, balls, tubes, hoses, pipes, tanks, containers (e.g., bottles and bags), membranes, sheets, valves, diaphragms, sleeves, stators, belts, rolls, and covers used as part of these instruments or production lines.

In addition to the use as a crosslinked rubber molded article, the component of the invention may also be used as a part in a variety of fields. The following will describe applications of the component of the invention.

The component of the invention may be used as any of surface modifiers for metal, rubber, plastic, or glass; sealants and covers requiring heat resistance, chemical resistance, oil resistance, and non-viscousness, such as metal gaskets and oil seals; and non-viscous covers or bleed barriers for rolls for OA equipment and belts for OA equipment, and may be impregnated into or bake-applied to fabric sheets and belts.

The presently used component, with a high viscosity and high concentration, may be formed into any of seal materials, linings, and sealants having more complicated shapes by a usual method. The presently used component, with a low viscosity, may be formed into thin films of several micrometers. The presently used component, with a middle viscosity, may be applied to any of pre-coated metals, O-rings, diaphragms, and reed valves.

Further, the presently used component may be applied to any of rolls or belts for transporting fabric or paper, printing belts, chemical-resistant tubes, stoppers for chemicals, and fuel hoses.

The presently used component may be used as a cover, and examples of the target to be covered include metals such as iron, stainless steel, copper, aluminum, carbon steel, and brass; glass products such as glass plates and woven or nonwoven fabric of glass fiber; molded articles of or articles covered with general-purpose or heat-resistant resin (e.g., polypropylene, polyoxymethylene, polyimide, polyamide imide, polysulfone, polyether sulfone, and polyether ether ketone); molded articles of or articles covered with general-purpose rubber (e.g., SBR, butyl rubber, NBR, EPDM) or heat-resistant rubber (e.g., silicone rubber, fluororubber); and woven or nonwoven fabric of natural or synthetic fiber.

The presently used component may be dissolved in a solvent and then used as a coating or an adhesive. The presently used component may also be used as a coating in the form of emulsion dispersion (latex).

The composition may be used as any of surface-treating agents for seal materials and linings for various devices and pipes, and structures formed of an inorganic or organic substrate such as metal, ceramic, glass, stone, concrete, plastic, rubber, wood, paper, or fiber.

The composition may be applied to any of the above substrates using a dispenser or by screen printing.

The presently used component may be a component formed by casting a film or by immersing a substrate such as fabric, plastic, metal, or elastomer.

In particular, the presently used component in the form of latex may be used for production of covered fabric, protective gloves, impregnated fibers, covers for O-rings, covers for quick connecting O-rings for fuel systems, covers for fuel system seals, covers for fuel tank rollover valve diaphragms, covers for fuel tank pressure sensor diaphragms, covers for oil filter and fuel filter seals, covers for fuel tank sender seals and for sender head fitting seals, covers for rolls of fixing mechanisms of copiers, and polymer coating compositions.

These compositions are useful for covering silicone rubber, nitrile rubber, and other elastomers. To improve the heat stability thereof, as well as the permeation resistance and chemical resistance of substrate elastomers, these compositions are useful for covering parts produced from such elastomers. Examples of other applications include coverings for heat exchangers, expansion joints, vats, tanks, fans, flue ducts, and other ducts, and housing structures (e.g., concrete housing structures). The composition may be applied to exposed cross sections of multi-layer parts in, for example, a production method for hose-like structures or diaphragms. Sealing materials at jointing portions and coupling portions are often formed of a hard material, and the presently used component provides improved frictional interfaces and improved dimension interference fit with a reduced, slight amount of leakage along the sealed surface. The latex thereof improves the seal durability in applications of various automobile systems.

These materials can be used in production of any bonding portions where hoses and tubes are coupled with other parts. The component shows its usefulness in repair of production defects (and damages due to use) in multi-layer rubber structures such as multi-layer hoses. The component is also useful for application to thin sheet steel which may be formed or embossed before or after the application of the coating. For example, multiple layers of covered steels may be assembled and a gasket may be disposed between two rigid metal parts. The sealing effect can be achieved by applying the presently used component between the layers.

The presently used component may also be used as coatings; substrate-integrated gaskets and packings formed by dispenser-molding the composition to substrates including inorganic materials such as metal or ceramic; and multi-layer articles prepared by covering substrates including inorganic materials such as metal or ceramic.

The presently used component is also suitable as a light-weight, bendable, flexible material, and can be used for known instruments or part thereof. For example, the component may be used for electronic elements such as CMOS electron circuits, transistors, integrated circuits, organic transistors, light-emitting devices, electrodes, actuators, memories, sensors, coils, capacitors, and resistances. These elements may be applied to devices such as batteries, robots, displays, electronic artificial skins, artificial muscles, sheet-type scanners, refreshable braille displays, and wireless power transmission sheets.

### EXAMPLES

The invention will be described with reference to examples.

The materials used in the example and comparative examples are shown below.
Fluorine-containing elastomer (1): VdF/2,3,3,3-tetrafluoropropene = 77/23 mol%, glass transition temperature (Tg): -13°C, iodine content: 0.12 mass%
Fluorine-containing elastomer (2): VdF/2,3,3,3-tetrafluoropropene/TFE = 77/18/5 mol%, Tg: -19°C, iodine content: 0.16 mass%
Fluorine-containing elastomer (3): VdF/2,3,3,3-tetrafluoropropene = 77/23 mol%, containing 0.02 mol% of perfluoro-6,6-dihydro-6-iodo-3-oxa-1-hexene, Tg: -14°C, iodine content: 0.23 mass%
Fluorine-containing elastomer (4): ternary fluororubber (VDF/HFP/TFE = 50/30/20 mol%), Tg: -5°C, iodine content: 0.23 mass%
Fluorine-containing elastomer (5): binary fluororubber (VDF/HFP = 78/22 mol%), Tg: -20°C, iodine content: 0.18 mass%
Fluorine-containing elastomer (6): pre-compound of ternary fluororubber (VDF/HFP/TFE = 61/18/21 mol%), Tg: - 15°C
Carbon black: N990
TAIC: triallyl isocyanurate
Perhexa 25B: (2,5-dimethyl-2,5-di(t-butylperoxy)hexane

### Examples 1-3 and Comparative Examples 1 and 2

The materials in amounts shown in Table 1 were mixed and kneaded by a common method using an 8-inch open roll, whereby a fluorine-containing elastomer composition was prepared. The resulting fluorine-containing elastomer composition was subjected to first crosslinking by pressure-crosslinking and molding, followed by second crosslinking using a thermal oven. The first crosslinking was performed at 160°C for 10 minutes and the second crosslinking was performed at 180°C for 4 hours. The resulting molded article was evaluated as described below. The results are shown in Table 1.

### Comparative Example 3

The materials in amounts shown in Table 1 were mixed and kneaded by a common method using an 8-inch open roll, whereby a fluorine-containing elastomer composition was prepared. The resulting fluorine-containing elastomer composition was subjected to first crosslinking by pressure-crosslinking and molding, followed by second crosslinking using a thermal oven. The first crosslinking was performed at 170°C for 10 minutes and the second crosslinking was performed at 230°C for 24 hours. The resulting molded article was evaluated as described below. The results are shown in Table 1.

### <Physical properties in tension>

The 100% modulus (M100), the tensile strength at break (Tb) and the tensile elongation at break (Eb) were determined in conformity with JIS K6251.

### <Hardness (Hs (Shore A, peak))>

The hardness (peak value) was measured using a durometer Type A in conformity with JIS K6253.

### <Acid dipping test>

With a 5 mass% nitric acid aqueous solution, a dipping test was performed at 90°C for 72 hours. The 100% modulus (M100), the tensile strength at break (Tb), the tensile elongation at break (Eb), the hardness (Hs (Shore A, peak)), and the volume swelling ratio (ΔV) after the dipping test were determined, and the percent change of each value before and after the dipping was calculated. ΔV means the percent change of the volume (degree of swelling) before and after the sample was dipped under predetermined conditions, and is expressed by ΔV = (V - Vo)/Vo × 100 (%), wherein Vo represents the original volume of the sample and V represents the volume after the test. The volume is calculated from the weight in the air and the weight in water.

### <Alkali dipping test>

With a 30 mass% sodium hydroxide aqueous solution (pH: about 14), a dipping test was performed at 90°C for 72 hours. The 100% modulus (M100), the tensile strength at break (Tb), the tensile elongation at break (Eb), the hardness (Hs (Shore A, peak)), and the volume swelling ratio (ΔV) after the dipping test were determined, and the percent change of each value before and after the dipping was calculated. ΔV means the percent change of the volume (degree of swelling) before and after the sample was dipped under predetermined conditions, and is expressed by ΔV = (V - Vo)/Vo × 100 (%), wherein Vo represents the original volume of the sample and V represents the volume after the test. The volume is calculated from the weight in the air and the weight in water.

### <Steam exposure test>

A sample was exposed to 200°C steam for 72 hours. The 100% modulus (M100), the tensile strength at break (Tb), the tensile elongation at break (Eb), the hardness (Hs (Shore A, peak)), and the volume swelling ratio (ΔV) after the exposure test were determined, and the percent change of each value before and after the exposure was calculated. ΔV means the percent change of the volume (degree of swelling) before and after the sample was exposed under predetermined conditions, and is expressed by ΔV = (V - Vo)/Vo × 100 (%), wherein Vo represents the original volume of the sample and V represents the volume after the test. The volume is calculated from the weight in the air and the weight in water.

**[Table 1]**

| Example No. | | | Example 1 | Example 2 | Example 3 | Comparative Example 1 | Comparative Example 2 | Comparative Example 3 |
|---|---|---|---|---|---|---|---|---|
| Composition (parts by mass) | Fluorine-containing elastomer (1) | | 100 | | | | | |
| | Fluorine-containing elastomer (2) | | | 100 | | | | |
| | Fluorine-containing elastomer (3) | | | | 100 | | | |
| | Fluorine-containing elastomer (4) | | | | | 100 | | |
| | Fluorine-containing elastomer (5) | | | | | | 100 | |
| | Fluorine-containing elastomer (6) | | | | | | | 100 |
| | Carbon black | | 20 | 20 | 20 | 20 | 20 | 20 |
| | TAIC | | 4 | 4 | 4 | 4 | 4 | |
| | Perhexa 25B | | 1.5 | 1.5 | 1.5 | 1.5 | 1.5 | |
| | Magnesium oxide | | | | | | | 3 |
| | Calcium hydroxide | | | | | | | 6 |
| Physical properties in normal state | M100 (tensile strength) | MPa | 1.9 | 1.9 | 2.3 | 3.1 | 1.9 | 2.9 |
| | Tb (strength at break) | MPa | 20.4 | 22.3 | 19.3 | 20.9 | 22.8 | 13.8 |
| | Eb (elongation at break) | % | 520 | 510 | 330 | 330 | 450 | 390 |
| | Hs (hardness) | - | 67 | 66 | 66 | 72 | 68 | 74 |
| Acid dipping test 90°C for 72 hours | ΔM100 | % | -7 | -5 | -5 | -5 | -3 | 17 |
| | ΔTb | % | -5 | -4 | -5 | -8 | -28 | -47 |
| | ΔEb | % | 8 | 8 | 3 | 5 | -10 | -46 |
| | ΔHs | - | -2 | -1 | -2 | 1 | -1 | -29 |
| | Volume swelling ratio | % | 2 | 1 | 2 | 1 | 1 | 85 |
| | Appearance | | Good (no change) | Good (no change) | Good (no change) | Good (no change) | Good (no change) | Poor (crack) |
| Alkali dipping test 90°C for 72 hours | ΔM100 | % | 3 | 3 | -2 | 2 | 2 | -38 |
| | ΔTb | % | -6 | -5 | -5 | -7 | -11 | -39 |
| | ΔEb | % | -8 | -6 | -3 | -10 | -7 | -9 |
| | ΔHs | - | 0 | 1 | 1 | 1 | 0 | -7 |
| | Volume swelling ratio | % | 1 | 1 | 1 | -2 | -2 | -10 |
| | Appearance | | Good (no change) | Good (no change) | Good (no change) | Poor (contract/dissolution) | Poor (contract/dissolution) | Poor (contract/dissolution) |
| Steam e)posure test 200°C for 72 hours | ΔM100 | % | -13 | -11 | -9 | -8 | -15 | -42 |
| | ΔTb | % | -16 | -17 | -13 | -29 | -29 | -64 |
| | ΔEb | % | 13 | 10 | 6 | 5 | 3 | 54 |
| | ΔHs | - | 1 | 2 | 2 | 2 | -2 | 3 |
| | Volume swelling ratio | % | 1 | 3 | 3 | 5 | 6 | 17 |

Analysis of the component produced in Example 1 based on Standards and criteria for food and food additives, etc. prescribed in the 1959 Ministry of Health and Welfare notification No. 370 was entrusted to General Incorporated Association Japan Food Research Laboratories. The analysis demonstrated that the component was appropriate in terms of cadmium and lead in the material test, appropriate to phenols, formaldehyde, zinc, and heavy metals in the dissolution test, and the evaporation residues relative to 20% ethanol, water, and 4% acetic acid were within the limit, i.e., 5 µg/ml or less. Therefore, the component can suitably be used for food-related instruments and production lines.

### INDUSTRIAL APPLICABILITY

The component of the invention exhibits resistance particularly to alkalis, and thus can suitably be applied to, for example, instruments and part thereof, and production lines used in the industries such as the food industry, the cosmetic industry, the healthcare industry, and the pharmaceutical industry.

## Claims

1. Use of a crosslinked product of a fluorine-containing amorphous elastomer which
1) has a glass transition temperature (Tg) of ≤ 25°C, determined by the method defined in the description; and
2) is a copolymer of
(i) vinylidene fluoride,
(ii) a fluorine-containing monomer of the formula CH₂=CFRf (1) wherein Rf is linear or branched C₁₋₁₂-fluoroalkyl, and
(iii) 0-50 mol%, based on all monomer units of the copolymer, of a third monomer copolymerizable with these monomers,
with the molar ratio (i)/(ii) of the monomers (i) and (ii) being 87/13 to 20/80,
to improve the alkali resistance of a surface of instruments or production lines requiring alkaline cleaning and being contacted with an alkali solution having a pH of ≥ 8.0.

2. The use of claim 1, wherein the surface is a surface of an instrument used in the food, cosmetic, healthcare or pharmaceutical industry.

## Patentansprüche

1. Verwendung eines vernetzten Produkts eines fluorhaltigen amorphen Elastomers, das
1) eine Glasübergangstemperatur (Tg) von ≤ 25°C, bestimmt durch die in der Beschreibung definierten Methode, aufweist; und
2) ein Copolymer ist aus
(i) Vinylidenfluorid,
(ii) einem fluorhaltigen Monomer der Formel CH₂=CFRf (1), worin Rf ein lineares oder verzweigtes C₁₋₁₂-Fluoralkyl ist, und
(iii) 0-50 mol%, bezogen auf alle Monomereinheiten des Copolymers, eines dritten Monomers, das mit diesen Monomeren copolymerisierbar ist,
wobei das molare Verhältnis (i)/(ii) der Monomere (i) und (ii) 87/13 bis 20/80 beträgt,
zur Verbesserung der Alkalibeständigkeit einer Oberfläche von Instrumenten oder Produktionslinien, die alkalisch gereinigt werden muss und mit einer Alkalilösung mit einem pH-Wert von ≥ 8,0 in Kontakt kommt.

2. Verwendung gemäß Anspruch 1, worin die Oberfläche eine Oberfläche eines Instruments ist, das in der Lebensmittel-, Kosmetik-, Gesundheits- oder Pharmaindustrie verwendet wird.

## Revendications

1. Utilisation d'un produit réticulé d'un élastomère amorphe contenant du fluor qui
1) a une température de transition vitreuse (Tg) ≤ 25 °C, déterminée selon le procédé défini dans la description ; et
2) est un copolymère de
(i) fluorure de vinylidène,
(ii) un monomère contenant du fluor de la formule CH₂ = CFRf (1) dans laquelle Rf est un C₁₋₁₂-fluoroalkyle linéaire ou ramifié, et
(iii) 0 à 50 % en mole, sur la base de toutes les unités monomères du copolymère, d'un troisième monomère copolymérisable avec ces monomères,
le rapport molaire (i)/(ii) des monomères (i) et (ii) étant de 87/13 à 20/80,
pour améliorer la résistance aux alcalis d'une surface d'instruments ou de lignes de production nécessitant un nettoyage alcalin et étant mis en contact avec une solution alcaline ayant un pH ≥ 8,0.

2. Utilisation selon la revendication 1, dans laquelle la surface est une surface d'un instrument utilisé dans l'industrie alimentaire, cosmétique, sanitaire ou pharmaceutique.
